# EUROPEAN PATENT SPECIFICATION

(11) **EP 1 559 757 B1**
(45) Date of publication and mention of the grant of the patent: **22.08.2007**
(21) Application number: 05001596.5
(22) Date of filing: 26.01.2005
(51) Int. Cl.: C09D 11/00

(54) **Inkjet recording ink and production method thereof**
Tinte für den Tintenstrahldruck und ihre Herstellungsverfahren
Encre pour impression par jet d'encre et sa procéde de fabrication

(30) Priority: 27.01.2004 JP 2004018557
(43) Date of publication of application: 03.08.2005
(73) Proprietor: FUJIFILM Corporation, Minato-ku Tokyo (JP)
(72) Inventor: Sakasai, Yutaka, Yoshida-cho, Haibara-gun, Shizuoka (JP)
(74) Representative: HOFFMANN EITLE

(56) References cited:
- EP-A- 0 475 075
- EP-A- 1 167 468

## Description

### FIELD OF THE INVENTION

The present invention relates to an inkjet recording ink and a production method thereof. In particular, the invention relates to an ink suitable for use in an electrostatic inkjet recording apparatus which fly an ink to form letters or images on a receiving medium, for example, a recording paper, and a production method of the ink.

### BACKGROUND OF THE INVENTION

Ink jet recording method of forming recorded dots by flying an ink to a recording medium to conduct printing has attracted attention as a non-impact recording method which enables coloration with ease and direct recording on plain paper, and various printers based on the method have been put into practice. As the ink jet recording system, there have been known on-demand ejection systems and continuous ejection systems, as described, for example, in Takeshi Agui, et al., Real Color Hard Copy, Sangyo Tosho Co., Ltd. (1993), Shin Ohno, Non-impact Printing - Technologies and Materials -, CMC Publishing Co., Ltd. (1986), and Takeshi Amari, Inkjet Printers - Technologies and Materials -, published by CMC Publishing Co., Ltd. (1998). Further, the continuous type includes electrostatic systems (Sweet type and Hertz type), and the on-demand type includes recording systems called a piezoelectric system, a shear mode piezoelectric system and a thermal inkjet system. As one of the on-demand type inkjet recording method, there is known, for example, a recording system called electrostatic acceleration type inkjet or slit jet as described, for example, in Susumu Ichinose and Yuji Ohba, Denshi Tsushin Gakkai Rombunnshi, Vol. J66-C (No. 1), p.47 (1983), Tadayoshi Ohno and Mamoru Mizuguchi, Gazo Denshi Gakkaishi, Vol. 10 (No. 3), p.157 (1981).

In the system, a voltage is applied across a plurality of recording electrodes disposed toward a recording medium and an counter electrode provided behind the recording medium, and the difference in potential generated between the both electrodes generates an electrostatic force acting on an ink supplied to the recording electrodes to eject the ink onto the recording medium. Specific embodiments thereof are disclosed, for example, in JP-A-56-170 (the term "JP-A" as used herein means an "unexamined published Japanese patent application"), JP-A-56-4467 and JP-A-57-151374. In the system, a long and narrow slit-like ink-ejecting outlet section having many recording electrodes in the inside wall is used in place of nozzles in conventional inkjet heads, an ink is supplied into the slit-like ink chamber, and a high voltage is selectively applied to these electrodes, thereby ejecting the ink in the vicinity of the electrode to recording paper closely positioned to the slit-like head to conduct recording.

Thus, there exists less possibility of clogging of ink, and reduction in production cost can be expected due to the simple structure of the head and, in addition, the system is advantageous for realizing a so-called long line head having an enough length to cover a wide range of a recording medium in the width direction.

One example of the drop-on-demand type full-color recording head based on such an electrostatic acceleration type ink jet recording system is disclosed, for example, in JP-B-60-59569 (the term "JP-B" as used herein means an "examined Japanese patent publication") and Denshi Tsusin Gakkai Rombunshi, Vol. J68-C, 2 (1985), pp. 93-100.

In the electrostatic acceleration type inkjet head, an oil-based ink wherein a dye is dissolved in an organic solvent is preferably used. For example, an ink, which has physical properties, i.e., a volume resistivity (electric resistivity) of 10⁷ to 10⁸ Ω·cm, a surface tention of 22 mN/m and a viscosity of 3.1 to 6.9 cP is used, though details are not disclosed as to constituting materials for the ink.

However, such an oil-based ink has a smaller surface tension in comparison with an aqueous ink ordinarily used in other ink jet recording systems, and hence it shows such a large permeability into recording paper, particularly in the case of printing on plain paper, that problems arise in that reduction in printing density, blur and strike through are liable to take place.

An electrostatic system of a coloring material concentration discharge type without using a slit-like recording head is disclosed in Patent Document 1 (JP-A-9-193389) and Patent Document 2 (JP-A-10-138493). In the system, a plurality of individual electrodes for allowing an electrostatic force to act on a coloring material component in an ink are constituted of a control electrode substrate composed of an insulating plate having a through-hole formed therein and a control electrode formed corresponding to the through-hole and a convex ink guide arranged in the substantially center position of the through-hole, the ink is carried on the surface of convex ink guide to an ink droplet flying position by a surface tension, and a prescribed voltage is applied to the control electrode to fly ink droplet to a recording medium, thereby conducting recording.

In the coloring material concentration discharge type electrostatic inkjet recording system, particles of the coloring material are gathered at an ejecting outlet section by electrophoresis, and ink droplets are ejected in a highly concentrated state of the particles of coloring material. Therefore, unlike in the case of the above-described system, the ink droplets are ejected in a state wherein the particles of coloring material are aggregated and the amount of liquid component is small, and not in a state wherein ink-constituting components are uniformly present in a large amount of liquid component, thus the above-described problems in that reduction in printing density, blur and strike through are liable to take place are resolved. In addition, use of a pigment as coloring material provides advantageous results with respect to water resistance and light fastness of printed images as well in comparison with conventional inkjet systems using a dye.

In the ink for the coloring material concentration discharge type electrostatic inkjet recording system, it is first required for the ink to have a sufficiently large volume resistivity in order to obtain good printing properties of having high printing density without blur and strike through. This permits the electric field generated by voltage applied across the recording electrode and the counter electrode to reach the particles of coloring material. In case where the volume resistivity of ink is too low, the ink suffers injection of charge to acquire charge due to the voltage applied by the recording electrode, and the ink is liable to be ejected in a state of containing a large amount of a liquid component due to electrostatic repelling force. Next, the particles of coloring material are required to have a sufficient charge amount, i.e., to have a positive or negative high particle conductivity, because it is necessary to gather the particles of coloring material at the ejection outlet section at a sufficient speed by electrophoresis.

In recent years, with an increase in requirement for printer of high speed recording with high image quality, the coloring material concentration discharge type ink head as described above also requires a technique for printing a highly precise image at a high speed by ejecting fine ink droplets in which the coloring material is highly concentrated stably and at a high speed for a long period of time.

It has been confirmed that such printing performances of ink greatly depend upon physical properties of ink. In order to obtain sufficient printing performances, it is necessary in producing the ink to impart a high electric conductivity of 100 pS/cm or more to the particles of coloring material while maintaining volume resistivity of the ink composition at a high level preferably, for example, of 10⁸ Ω·cm or more. If the electric conductivity of the particles of coloring material is less than 100 pS/cm, the particles of coloring material can not be transferred to the ejecting outlet section, i.e., to the tip of ejection electrode, at a high speed by electrophoresis, and hence the particles of coloring material can not be supplied sufficiently, resulting in deterioration of aggregating properties of the particles of coloring material and reduction in ejection response frequency.

Further, in some cases, the particles of coloring material adhere and deposit on the ejection electrode due to weak repelling force between the surface of ejection electrode and the particles of coloring material, leading to unstable ejection. Thus, problems arise that sufficient printing density cannot be obtained and that stable and high-speed printing cannot be conducted.

The particles of coloring material are preferably constituted by a coloring material, for example, pigment and a resin. Resins for covering the coloring material are desired (1) to sufficiently cover the surface of pigment particles to form a coloring material mixture and show a proper fluidity upon being heated, (2) to well disperse the particles of coloring material by covering the surface of the particles, (3) to be as transparent as possible, (4) to be fixed on a recording medium by fixing procedure to impart a sufficient scratch resistance and, with the ink for electrostatic inkjet recording, (5) to impart a positive or negative, high electrical conductivity to the particles of coloring material. The particles of coloring material comprising a coloring material covered with a resin can be formed by covering the coloring material with the resin to form a colored mixture, then dispersing the colored mixture in a nonaqueous solvent. Actually, however, ordinary dispersing procedure can generate coarse particles of the coloring material, or generate minute particles of the coloring material, and it is difficult to obtain particles of coloring material having a uniform average particle size.

EP 1 167 468 A1 concerns an ink jet recording ink including a self-dispersible pigment having an anionic group or cationic group bound to the surface thereof directly or through another atomic group, a pigment which can be dispersed in an aqueous medium with a polymeric dispersant, and a polymeric dispersant in an aqueous medium. The pigment dispersion solution may be prepared by the use of two types of ultrafilter membranes having a cut-off molecular weight of 50 nm and 500 nm, respectively in order to obtain a particle diameter distribution of the dispersed pigment of from 50 to 500 nm.
Patent Document 1: JP-A-9-193389
Patent Document 2: JP-A-10-138493

### SUMMARY OF THE INVENTION

An object of the invention is to provide an inkjet recording ink, which is capable of improving ejection performance to draw stably images of high image quality even when recording is conducted for a long period of time and is excellent in running cost, and a production method of the inkjet recording ink.

As a result of intensive investigations, the inventor has found that the above-described object can be achieved by reducing the content of minute particles present in coloring material particles to complete the invention.

Specifically, the invention is as follows.
(1) A production method of an inkjet recording ink comprising a dispersion medium, a dispersant and coloring material particles containing at least a coloring material, which method comprises a step of removing minute coloring material particles from the coloring material particles, wherein by the step of removing minute coloring material particles from the coloring material particles, the content of coloring material particles having a size of 1/5 or less of the volume average diameter of the coloring material particles is reduced to 5% by volume or less based on the total coloring material particles.
(2) The production method of an inkjet recording ink as described in (1) above, wherein the step of removing the minute coloring material particles from the coloring material particles is conducted by a means employing gravity, centrifugal force, interface characteristics of the coloring material particle or a combination thereof.
(3) The production method of an inkjet recording ink as described in (2) above, wherein the means employing gravity is a means of using a spontaneous precipitation method.
(4) The production method of an inkjet recording ink as described in (2) above, wherein the means employing centrifugal force is a centrifuge or a liquid cyclone.
(5) The production method of an inkjet recording ink as described in (2) above, wherein the means employing the interface characteristics of the coloring material particle is a means of using an electrophoresis.
(6) An inkjet recording ink obtained by the production method of an inkjet recording ink as described in (1) above.

### BRIEF DESCRIPTION OF THE DRAWINGS

Fig. 1 is a schematic view showing a constructional embodiment of an inkjet head for use in an electrostatic inkjet recording method, and particularly shows a cross-section of an ejection electrode corresponding to a recording dot.
Fig. 2 is a schematic view showing a constructional embodiment of an ink circulation system for an inkjet recording apparatus for use in the invention.
Fig. 3 is a schematic view for illustrating an electrophoretic classifying apparatus used in Example 7.

1: Ink tank
2: Ejection head
3: Pump
4: Filter
5: Accumulator
6: Ink concentration detector
7: Replenishing ink container
8: Container including concentrated ink
9: Container including diluted ink
10: Valve
11: Level sensor
75: Electrophoretic classifying apparatus
80: Ink passage
88: Parallel electrode
90: Voltage source
92: Ink recovery subtank
94: Ink disposal subtank
100: Ink
102: Head substrate
103: Ejection electrode substrate
109: Ejection electrode
110: Ink droplet flying position
111: Ink circulation system
112: Ink supply system
113: Ink recovery system
123: Bias voltage source
124: Signal voltage source

### DETAILED DESCRIPTION OF THE INVENTION

As a result of intensive investigations, the inventor has found that there is a close relationship between the ejection performance and the content of minute particles present in coloring material particles. Specifically, it has been found that blur of ink and undesirable ejection from the vicinity of head tip occur when a large amount of minute particles are present in the coloring material particles. In other words, it is preferred that particle size distribution of the coloring material particles is narrow and uniform. Thus, by removing minute coloring material particles from the coloring material particles, good ejection performance without ink clogging is achieved, whereby printing of dot having high density without blur becomes possible at high speed and stably. Further, stable ejection for a long period of time becomes possible.

According to the invention, an inkjet recording ink, which is capable of improving ejection performance of ink to draw stably images of high image quality even when inkjet recording is conducted for a long period of time and is excellent in running cost, and a production method of the inkjet recording ink are provided.

The invention will be described in detail below.

Now, the constituting components of the inkjet recording ink according to the invention is described below.

The dispersion medium for use in the inkjet recording ink according to the invention is preferably a non-polar insulating solvent having a relative dielectric constant of from 1.5 to 20 and a surface tension of from 15 to 60 mN/m (at 25°C). Characteristics further desired to the dispersion medium include a low toxicity, a low flammability and a low odor.

Examples of the dispersion medium include solvents selected from straight chain or branched aliphatic hydrocarbons, alicyclic hydrocarbons, aromatic hydrocarbons, petroleum naphthas and halogen-substituted products thereof. Specific examples thereof include solvents selected from hexane, octane, isooctane, decane, isodecane, decalin, nonane, dodecane, isododecane, Isopar E, Isopar G, Isopar H and Isopar L (manufactured by Exxon Corp.), Solutol (manufactured by Phillips Oil Co.), IP Solvent (manufactured by Idemitsu Petrochemical Co., Ltd.), and peptroleum naphthas including S.B.R., Shellsol 70 and Shellsol 71 (manufactured by Shell Petrochemical Co.) and Vegasol (manufactured by Mobil Oil Co.). The solvents can be used individually or as a mixture.

The hydrocarbon solvent is preferably a high-purity isoparaffinic hydrocarbon having a boiling point in the range of from 150 to 350°C. Examples of commercially available products thereof include Isopar G, Isopar H, Isopar L, Isopar M and Isopar V (brand names, manufactured by Exxon Chemical Co.), Norpar 12, Norpar 13 and Norpar 15 (brand names, manufactured by Exxon Chemical Co.), IP Solvent 1620 and IP Solvent 2028 (brand names, manufactured by Idemitsu Petrochemical Co., Ltd.), Isosol 300 and Isosol 400 (brand names, manufactured by Nippon Petrochemicals Co.), and Amsco OMS and Amsco 460 solvent (brand names, manufactured by American Mineral Spirits Corp.). These products are composed of an aliphatic saturated hydrocarbon having an extremely high purity, and have a viscosity of 3 cSt or less at 25°C, a surface tension of from 22.5 to 28.0 mN/m at 25°C and a volume resistivity of 10¹⁰ Ω·cm or more at 25°C. Further, these products have characteristics in that they are stable due to low reactivity, they are safe due to low toxicity and their odors are low.

The halogen-substituted hydrocarbon solvents include fluorocarbon solvents. Examples thereof include perfluoroalkanes represented by CₙF₂ₙ₊₂, for example, C₇F₁₆ and C₈F₁₈ (for example, Fluorinert PF5080 and Fluoriner PF5070 (brand names, manufactured by Sumitomo 3M Co.)), fluorine based inert liquids (for example, Fluorinert FC Series (brand names, manufactured by Sumitomo 3M Co.)), fluorocarbons (for example, Krytox GPL Series (brand names, manufactured by DuPont Japan Ltd.)), flons (for example, HCFC-141b (brand name, manufactured by Daikin Industries, Ltd.), and iodinated fluorocarbons, for example, F(CF₂)₄CH₂CH₂I and F(CF₂)₆I (for example, I-1420 and I-1600 (brand names, manufactured by Daikin Fine Chemical Laboratory, Ltd.)).

As the dispersion medium for use in the invention, higher fatty acid esters and silicone oils can also be used. Specific examples of the silicone oil include low-viscosity synthetic dimethylpolysiolxanes, which include commercially available products, for example, KF96L (brand name, manufactured by Shin-Etsu Silicone Co., Ltd.) and SH200 (brand name, manufactured by Dow Corning Toray Silicone Co., Ltd.).

The silicone oils are not limited to these specific examples. As the dimethylpolysiloxanes, those having a very broad viscosity range are available depending on the molecular weight thereof, but those having a viscosity at 25°C in the range of from 1 to 20 cSt are preferably used. Similar to the isoparaffinic hydrocarbons, the dimethylpolysiloxanes have a volume resistivity at 25°C of 10¹⁰ Ω·cm or more and have characteristics, for example, high stability, high safety and odorlessness. Further, the dimethylpolysiloxanes are characterized by having a low surface tension, i.e., the surface tension of from 18 to 21 mN/m at 25°C.

Examples of solvents that can be used together with the above-described organic solvents include alcohols (for example, methyl alcohol, ethyl alcohol, propyl alcohol, butyl alcohol and fluorinated alcohol), ketones (for example, acetone, methyl ethyl ketone and cyclohexanone), carboxylic acid esters (for example, methyl acetate, ethyl acetate, propyl acetate, butyl acetate, methyl propionate and ethyl propionate), ethers (for example, diethyl ether, dipropyl ether, tetrahydrofuran, and dioxane), and halogenated hydrocarbons (for example, methylene dichloride, chloroform, carbon tetrachloride, dichloroethane and methylchloroform).

Now, the coloring material for use in the invention will be described in detail below.

The coloring material is not particularly limited, and any organic pigments and inorganic pigments ordinarily commercially available may be used.

Examples of the pigment that exhibits yellow color include monoazo pigments, for example, C.I. Pigment Yellow 1 (e.g., Fast Yellow G) and C.I. Pigment Yellow 74; disazo pigments, for example, C.I. Pigment Yellow 12 (e.g., Disazo Yellow AAA) and C.I. Pigment Yellow 17; non-benzidine azo pigments, for example, C.I. Pigment Yellow 180; azo lake pigments, for example, C.I. Pigment Yellow 100 (e.g., Tartrazine Yellow Lake); condensed azo pigments, for example, C.I. Pigment Yellow 95 (e.g., Condensed Azo Yellow GR); acidic dye lake pigments, for example, C.I. Pigment Yellow 115 (e.g., Quinoline Yellow Lake); basic dye lake pigments, for example, C.I. Pigment Yellow 18 (e.g., Thioflavin Lake); anthraquinone pigments, for example, Flavanthrone Yellow (Y-24); isoindolinone pigments, for example, Isoindolinone Yellow 3RLT (Y-110); quinophthalone pigments, for example, Quinophthalone Yellow (Y-138); isoindoline pigments, for example, Isoindoline Yellow (Y-139); nitroso pigments, for example, C.I. Pigment Yellow 153 (e.g., Nickel Nitroso Yellow); and metal complex azomethine pigments, for example, C.I. Pigment Yellow 117 (e.g., copper Azomethine Yellow).

Examples of the pigment that exhibits magenta color include monoazo pigments, for example, C.I. Pigment Red 3 (e.g., Toluidine Red); disazo pigments, for example, C.I. Pigment Red 38 (e.g., Pyrazolone Red B); azo lake pigments, for example, C.I. Pigment Red 53:1 (e.g., Lake Red C) and C.I. Pigment Red 57:1 (Brilliant Carmine 6B); condensed azo pigments, for example, C.I. Pigment Red 144 (e.g., Condensed Azo Lake BR); acidic dye lake pigments, for example, C.I. Pigment Red 174 (e.g., Phloxine B Lake); basic dye lake pigments, for example, C.I. Pigment Red 81 (e.g., Rhodamine 6G' Lake); anthraquinone pigments, for example, C.I. Pigment Red 177 (e.g., Dianthraquinonyl Red); thioindigo pigments, for example, C.I. Pigment Red 88 (e.g., Thioindigo Bordeaux, etc.); perinone pigments, for example, C.I. Pigment Red 194 (e.g., Perinone Red); perylene pigments, for example, C.I. Pigment Red 149 (e.g., Perylene Scarlet); quinacridone pigments, for example, C.I. Pigment Red 122 (e.g., Quinacridone Magenta); isoindolinone pigments, for example, C.I. Pigment Red 180 (e.g., Isoindolinone Red 2BLT); and arizalin lake pigments, for example, C.I. Pigment Red 83 (e.g., Madder Lake).

Examples of the pigment that exhibits cyan color include disazo pigments, for example, C.I. Pigment Blue 25 (e.g., Dianisidine Blue); phthalocyanine pigments, for example, C.I. Pigment Blue 15 (e.g., Phthalocyanine Blue, etc.); acidic dye lake pigments, for example, C.I. Pigment Blue 24 (e.g., Peacock Blue Lake); basic dye lake pigments, for example, C.I. Pigment Blue 1 (e.g., Victoria Pure Blue BO Lake); anthraquinone pigments, for example, C.I. Pigment Blue 60 (e.g., Indanthrone Blue); and alkali blue pigments, for example, C.I. Pigment Blue 18 (e.g., Alkali Blue V-5:1).

Examples of the pigment that exhibits black color include organic pigments, for example, aniline black pigments, e.g., BK-1 (Aniline Black), iron oxide pigments, and carbon black pigments, for example, furnace black, lamp black, acetylene black and channel black.

Also, metallic powders may be utilized for conducting color reproduction, for example, gold, silver or copper color.

The coloring material for use in the inkjet recording ink is ordinarily subjected to surface treatment.

The surface treatment methods of coloring material are described in Pigment Dispersing Technologies, Chapter 5, Technical Information Institute Co., Ltd., and examples thereof include rosin treatment, polymer treatment, grafting treatment and plasma treatment. Each of the treatment methods is described in detail below.

The "rosin treatment" as referred to herein includes, for example, a method in which a pigment and rosin are mechanically kneaded to treat the surface of the pigment with rosin and a method in which after adding an alkali aqueous solution of rosin to an aqueous slurry of a pigment, an alkaline earth metal salt or an acid is added to the mixture to deposit a sparingly soluble salt or free acid of rosin on the surface of pigment particle. In the rosin treatment, the rosin is ordinarily used in an amount of from several % by weight to 20% by weight based on the pigment. The rosin treatment brings about the following large effects: (1) fine and highly transparent pigment is obtained due to the effect for preventing crystal growth of the pigment; (2) mechanical dispersion is easy conducted because of small cohesive forth of particle in drying; and (3) wetting property to an oil based vehicle is improved by increasing oleophilicity on the pigment surface. In particular, the rosin treatment is broadly used in the field of printing ink.

The "grafting treatment" as referred to herein is to conduct a grafting reaction of functional group, for example, a hydroxy group, a carboxy group or an amino group, present on the surface of carbon black, an inorganic fine particle, for example, silica or titanium oxide, or an organic pigment with a polymer. The grafting reaction of the polymer to the pigment surface includes (1) a method in which a vinyl monomer is polymerized in the presence of pigment fine particles using a polymerization initiator, and the growing of polymer formed in the system is terminated at the functional group on the surface of pigment fine particle, (2) a method in which a graft chain is grown from a polymerization initiating group introduced on the surface of pigment fine particle and (3) a method of a polymer reaction between the functional group on the surface of pigment fine particle and a terminal functional group of the polymer.

The "plasma treatment" as referred to herein is to conduct modification of the pigment powder surface with low-temperature plasma or thermal plasma. Specific examples of the treatment of pigment surface with low-temperature plasma include (1) modification by plasma irradiation with a non-polymerizable gas, for example, oxygen or nitrogen, (2) modification by formation of plasma polymerized film using a polymerizable gas and (3) modification by a two-stage plasma initiation graft polymerization reaction comprising a first stage for forming an active species on the pigment surface by plasma irradiation and a second stage for bringing the active species into contact with a monomer to proceed graft polymerization as the post reaction.

In order to improve dispersibility of the pigment, the polymer treatment described below is preferred.

Representative methods of the polymer treatment include a chemical method of utilizing an in-situ polymerization method as described in Pigment Dispersing Technologies, page 99, et seq., Technical Information Institute Co., Ltd., a method of utilizing a phase separation method (coacervation), and a method of conducting treatment with a mechanical force during pigment dispersion.

The in-situ polymerization method includes a method in which a system of pigment and polymer is dispersed, followed by subjecting to suspension polymerization, a method in which a pigment is dispersed in an aqueous system in the presence of a dispersant and to the dispersion are added a polar polymer, a vinyl polymer and a polyfunctional crosslinking polymer to undergo polymerization, and a method in which a dispersion of a monomer and a pigment is subjected to mass polymerization and then to suspension polymerization or emulsion polymerization, thereby thoroughly achieving adsorption onto the pigment.

The phase separation method (coacervation) includes a method in which a pigment is dispersed in a polymer solution, and the solubility of the polymer is reduced by an appropriate method to deposit the polymer from the solution system onto the pigment particle. The method is characterized in that the polymer can be selected from a wide range, in comparison with the chemical method (in-situ polymerization method). There are broadly used a method in which a nonsolvent is added to a resin solution containing a pigment dispersed therein to deposit the resin on the pigment surface and a method in which a pigment is finely dispersed in a water-soluble polymer or a water-soluble resin solution, then the pH thereof is adjusted to deposit the polymer or resin on the pigment surface. When a pigment is dispersed in an acid solution of an acid-soluble nitrogen-containing acrylic resin and then the pH thereof is increased to insolubilize the polymer on the pigment surface, effects, for example, prevention of coagulation and improvements in fluidity, gloss and coloring power are recognized.

As the method of polymer treatment by a mechanical force, a method is exemplified wherein a polymer and a pigment are previously mixed such that the pigment content is from 5 to 95 %, the mixture is kneaded, for example, by a kneader or three rolls, while heating, and the kneaded mixture is then pulverized, for example, by a pin mill. A method called flushing resin treatment is also included in the mechanical polymer treatment method.

As the resin that is used in the polymer treatment, any resin capable of enhancing dispersibility of a pigment in a dispersion medium can be employed without particular limitation.

Resins having a segment solvating with a solvent, a segment hardly solvating with a solvent and a polar group-containing segment are preferred for the purposes of adsorbing on a coloring material and having a function of well dispersing the coloring material in the dispersion medium. Examples of the monomer that solvates with a solvent after polymerization include lauryl methacrylate, stearyl methacrylate, 2-ethylhexyl methacrylate and cetyl methacrylate. Examples of the monomer that hardly solvates with a solvent after polymerization include methyl methacrylate, ethyl methacrylate, isopropyl methacrylate, styrene and vinyltoluene. Examples of the polar group-containing monomer include an acidic group-containing monomer, for example, acrylic acid, methacrylic acid, itaconic acid, fumaric acid, maleic acid, styrenesulfonic acid and an alkali metal salt thereof and a basic group-containing monomer, for example, dimethylamonoethyl methacrylate, diethylaminoethyl methacrylate, vinylpyridine, vinylpyrrolidine, vinylpiperidine and vinyl lactam.

Specific examples of the resin for use in the polymer treatment include olefin polymers and copolymers (for example, polyethylene, polypropylene, polyisobutylene, ethylene-vinyl acetate copolymer, ethylene-acrylate copolymer, ethylene-methacrylate copolymer and ethylene-methacrylic acid copolymer), polymers and copolymers of styrene or derivative thereof (for example, butadiene-styrene copolymer, isoprene-styrene copolymer, styrene-methacrylate copolymer and styrene-acrylate copolymer), acrylic acid ester polymers and copolymers, methacrylic acid ester polymers and copolymers, itaconic acid diester polymers and copolymers, maleic anhydride copolymers, rosin resins, hydrogenated rosin resins, petroleum resins, hydrogenated petroleum resins, maleic acid resins, terpene resins, hydrogenated terpene resins, chroman-indene resins, cyclized rubber-methacrylic acid ester copolymers and cyclized rubber-acrylic acid ester copolymers.

In the invention, a weight ratio of the coloring material to the resin used in the polymer treatment is preferably in the range of from 95/5 to 5/95, and more preferably from 80/20 to 10/90.

Further, as the surface-treated coloring material, ordinarily commercially available processed pigment can be used. Specific examples of the commercially available processed pigment include Microlith pigments manufactured by Ciba Specialty Chemicals Inc. Preferred examples of the processed pigment include Microlith-T pigment in which pigment is covered with a rosin ester resin.

In a dispersion step according to the invention, the above-described surface-treated coloring material is dispersed in the dispersion medium in the state of fine particles.

In order to disperse the surface-treated coloring material in the state of fine particles and to stabilize the dispersion in the dispersion medium, a dispersant is used in the dispersion step.

As the dispersant for use in the invention, conventional pigment dispersants capable of being used in the dispersion medium are used. Any pigment dispersants can be used so far as they are compatible with the above-described dispersion medium and can stably disperse the pigment in the state of fine particles.

Specific examples of the pigment dispersant include nonionic surfactants, for example, sorbitan fatty acid esters (e.g., sorbitan monooleate, sorbitan monolaurate, sorbitan sesquioleate and sorbitan trioelate), polyoxyethylene sorbitan fatty acid esters (e.g., polyoxyethylene sorbitan monostearate and polyoxyethylene sorbitan monooleate), polyethylene glycol fatty acid esters (e.g., polyethylene glycol monostearate and polyethylene glycol diisostearate), polyoxyethylene alkyl phenyl ethers (e.g., polyoxyethylene nonyl phenyl ether and polyoxyethylene octyl phenyl ether), and aliphatic diethanolamides. Further, as high-molecular dispersants, high-molecular compounds having a molecular weight of 1,000 or more are preferable. Examples thereof include styrene-maleic acid resins, styrene-acrylic resin, rosins, BYK-160, BYK-162, BYK-164 and BYK-182 (urethane based high-molecular compounds manufactured by BYK-Chemie), EFKA-47 and LP-4050 (urethane based dispersants manufactured by EFKA), Solsperse 24000 (polyester based high-molecular compound manufactured by Zeneca PLC), and Solsperse 17000 (aliphatic diethanolamide based high-molecular compound manufactured by Zeneca PLC).

Other examples of the high-molecular pigment dispersant include random copolymers comprising a monomer that solvates with a solvent (for example, lauryl methacrylate, stearyl methacrylate, 2-ethylhexyl methacrylate and cetyl methacrylate), a monomer that hardly solvates with a solvent (for example, methyl methacrylate, ethyl methacrylate, isopropyl methacrylate, styrene and vinyltoluene) and a polar group-containing monomer, and the graft copolymers described in JP-A-3-188469. Examples of the polar group-containing monomer include an acidic group-containing monomer, for example, acrylic acid, methacrylic acid, itaconic acid, fumaric acid, maleic acid, styrenesulfonic acid and an alkali metal salt thereof, and a basic group-containing monomer, for example, dimethylamonoethyl methacrylate, diethylaminoethyl methacrylate, vinylpyridine, vinylpyrrolidine, vinylpiperidine and vinyl lactam. In addition, styrene-butadiene copolymers and the block copolymers of styrene and a long chain alkyl methacrylate as described in JP-A-60-10263 are enumerated. Preferred examples of the pigment dispersant include the graft copolymers described in JP-A-3-188469.

The amount of the pigment dispersant used is preferably from 0.1 to 300 parts by weight based on 100 parts by weight of the coloring material. It is preferred to use the pigment dispersant in the above-described range since sufficient effect for dispersing pigment can be achieved.

As a method of using the pigment dispersant in the dispersion step of dispersing the surface-treated coloring material in the dispersion medium in the state of fine particles, methods described hereinafter are used, and any of these methods can achieve the desired effects.

The dispersion medium, coloring material and dispersant, which are used as the fundamental constituting materials in the invention are described above. The ink composition of the invention may further include various additives, if desired. Any of such additives can be selected depending on type of inkjet recording system or material or structure of inkjet ejection head, ink supply part and ink circulation part, and incorporated into the ink composition. For example, the additives described in Takeshi Amari, Inkjet Printers - Technologies and Materials-, Chapter 17, CMC Publishing Co., Ltd. (1998) can be used.

Specific examples thereof include metal salts of fatty acids (for example, monocarboxylic acids and polybasic acids each having from 6 to 32 carbon atoms, e.g., 2-ethylhexynoic acid, dodecenylsuccinic acid, butylsuccinic acid, 2-ethylcaproic acid, lauric acid, palmitic acid, elaidic acid, linolenic acid, ricinoleic acid, oleic acid, stearic acid, enanthic acid, naphthenic acid, ethylenediaminetetraacetic acid, abietic acid, dehydroabietic acid and hydrogenated rosin), resin acids, alkylphthalic acids and alkylsalicylic acids (examples of metal for metal ion including Na, K, Li, B, Al, Ti, Ca, Pb, Mn, Co, Zn, Mg, Ce, Ag, Zr, Cu, Fe and Ba), surface active compounds (for example, organophosphoric acids or salts thereof including mono-, di- or tri-alkylphosphoric acids containing an alkyl group having from 3 to 18 carbon atoms, organosulfonic acids or salts thereof including long-chain aliphatic sulfonic acids, long-chain alkylbenzenesulfonic acids, dialkylsulfosuccinic acids and metal salts thereof, amphoteric surface active compounds including phospholipids, e.g., lecithin and cephalin), surfactants having an alkyl group containing a fluorine atom- and/or dialkylsiloxan-bond group, aliphatic alcohols (for example, higher alcohols containing a branched alkyl group having from 9 to 20 carbon atoms, benzyl alcohol, phenethyl alcohol and cyclohexyl alcohol), polyhydric alcohols (for example, alkylene glycols having from 2 to 18 carbon atoms (e.g., ethylene glycol, 1,2-propylene glycol, 1,3-propylene glycol, 1,4-butanediol, neopentyl glycol, 1,6-hexanediol and dodecanediol)}, alkylene ether glycols having from 4. to 1,000 carbon atoms (for example, diethylene glycol, triethylene glycol, dipropylene glycol, polyethylene glycol, polypropylene glycol and polytetramethylene ether glycol), alicyclic diols having from 5 to 18 carbon atoms (for example, 1,4-cyclohexanedimethanol and hydrogenated bisphenol A), adducts of alkylene oxide having from 2 to 18 carbon atoms (for example, ethylene oxide, propylene oxide, butylenes oxide or α-olefin oxide) with bisphenol having from 12 to 23 carbon atoms (bisphenol A, bisphenol F and bisphenol S), polyols, for example, glycerin, trimethylolethane, trimethylolpropane, pentaerythritol and sorbitol, tri-hydric or more hydric phenols (for example, trisphenol PA, phenol novolak and cresol novolak), adducts of the tri-hydric or more hydric polyphenol with an alkylene oxide having from 2 to 18 carbon atoms (addition mole number: 2 to 20), ether derivatives of the polyhydric alcohols (for example, polyglycol alkyl ethers and alkylaryl polyglycol ethers), fatty acid ester derivatives of polyhydric alcohol, ether oleate derivatives of polyhydric alcohol (for example, ethylene glycol monoethyl acetate, diethylene glycol monobutyl acetate, propylene glycol monobutyl propionate and sorbitan monomethyl dioxalate), alkylnaphthalenesulfonates and alkylarylsulfonates. However, the additives are not limited to these compounds. The additives are preferably used in amounts so that the surface tension of the resulting ink composition falls within a range of from 15 to 60 mN/m (at 25°C) and the viscosity of the composition falls within a range of from 1.0 to 40 cP.

Further, it is preferred to add a charge controlling agent to the ink in order to control polarity and charge amount of ink particle. Preferred examples of the charge controlling agent include metal salts of organic carboxylic acids, for example, zirconium naphthenate and zirconium octenate, ammonium salts of organic carboxylic acids, for example, tetramethylammonium stearate, metal salts of organic sulfonic acids, for example, sodium dodecylbenzenesulfonate and magnesium dioctylsulfosuccinate, ammonium salts of organic sulfonnic acids, for example, tetrabutylammonium toluenesulfonate, polymers having carboxylic acid groups in the side chains thereof, for example, a polymer containing carboxylic acid groups obtained by modification of a copolymer of styrene and maleic anhydride with an amine, polymers having carboxylic acid anion groups in the side chains thereof, for example, a copolymer of stearyl methacrylate and tetramethylammonium methacrylate, polymers having nitrogen atoms in the side chains thereof, for example, a copolymer of styrene and vinyl pyridine, and polymers having ammonium groups in the side chains thereof, for example, a copolymer of butyl methacrylate and N-(2-methacroyloxyethyl)-N,N,N-trimethylammonium tosilate. A copolymer of octadecene and maleic acid half octadecylamide is a particularly preferred charge controlling agent. The charge to be applied to the particle may be positive charge or negative charge.

Now, the production method of the inkjet recording ink according to the present invention is described in detail below. The coloring material particle (coloring material resin particle) comprising a coloring material covered with a resin insoluble in a dispersion medium can be prepared by covering the coloring material with the resin (binder resin) to prepare a colored mixture, and dispersing the colored mixture in the dispersion medium in the state of fine particles. First, the step of covering a coloring material with a binder resin to prepare a colored mixture will be described. The colored mixture is prepared, for example, according to the following methods.
(1) A method of melt-kneading a coloring material and a binder resin at a temperature higher than a softening point of the binder resin using a kneading machine, for example, a roll mill, a Banbury mixer or a kneader and, after cooling, pulverizing the mixture to obtain a colored mixture.
(2) A method of dissolving a binder resin in a solvent, adding thereto a coloring material, wet-dispersing the mixture, for example, by a ball mill, an attritor or a sand grinder, and evaporating the solvent to obtain a colored mixture or pouring the dispersion into a nonsolvent for the above-described binder resin to obtain a precipitated mixture, followed by drying the mixture to obtain a colored mixture.
(3) A method of kneading an aqueous paste (wet cake) of a coloring material together with a resin or a resin solution to replace water with the resin or the resin solution according to the flushing method, and then removing the water and solvent by drying under a reduced pressure to obtain a colored mixture.

Then, the above-described colored mixture is dry-pulverized and subjected to the dispersing step in which the pulverized product is wet-dispersed together with a dispersant in a dispersion medium as described below. A dispersing machine for use in the dispersing step is not particularly limited, and any of commercially available wet-dispersing machines may be used. Examples thereof include a ball mill, a sand mill and an attritor. In order to prevent evaporation of solvent, a closed type dispersing machine is ordinarily used. The sand mill includes a vertical type and a horizontal type. In the sand mill, a shaft equipped with discs or pins is rotated at a peripheral speed of from 3 to 15 m/s to perform dispersion. An ink composition can be obtained with a good efficiency by arranging several continuous type sand mills in series and conducting dispersion with changing a size of media depending on the degree of dispersion. Also, in the case of dispersing a pigment having a large diameter using the continuous type sand mill, pre-dispersion is necessary and, in such a case, a disperser, a ball mill or a batch type sand mill is used as a pre-dispersing machine.

Examples of the horizontal type sand mill include Dyno-mill, Dyno-mill ECM (manufactured by WAB, Switzerland), Pearl mill, DCP mill (manufactured by Drais, Germany), Agitator mill (manufactured by Netzsch, Germany), Super mill (manufactured by Susmeyer, Belgium), Cobol mill (manufactured by Frema, Switzerland) and Spike mill (manufactured by Inoue Seisakusho Co.).

Examples of the media for ball mill or sand mill used include media of various materials, for example, zirconia, titania, alumina, glass, steel and silicon nitride. The material of media is selected in view of specific gravity and abrasion resistance of media depending on viscosity of dispersion liquid and degree of pre-dispersion.

The media size is not particularly limited and, for example, media of from 0.1 mm to 10 mm in diameter can be used. In general, the use of media having a larger particle size results in a broader particle size distribution, and the use of media having a smaller particle size tends to form dispersion of a smaller particle size. Also, a packing ratio of media is not particularly limited, and is preferably from 50% to 90%. The packing ratio of media has a close relationship to dispersing ability, and it is known that, in general, as a higher packing ratio can be achieved, dispersing efficiency is more improved. In comparison with a vertical type mill, a horizontal type mill does not cause at all a locking phenomenon of the media at the start, and hence it is preferred that the packing ratio is set to 80 to 85% based on the volume of vessel.

As described above, the coloring material particles can be obtained after the dry-pulverization of the colored mixture, by the wet-dispersion of the pulverized product using a dispersant together with media, for example, beads, in a dispersion medium. However, the methods for the preparation of coloring material particles are not limited to those described above. Specifically, the present invention is characterized in that the ejection performance is improved by removing minute coloring material particles and thus, the method for the preparation of coloring material particles should not be limited. As other methods for the preparation of coloring material particles, for example, a method wherein a monofunctional monomer is subjected to dispersion polymerization in the presence of a polymerization initiator using colored fine particles as seed particles to obtain colored resin particles can be employed.

The invention is characterized by comprising the step of removing minute coloring material particles from the coloring material particles, for example, those prepared as described above.

Methods for removing minute coloring material particles (hereinafter also referred to as minute particles sometimes) from the coloring material particles include, for example, known classifying methods, and the following various classifying systems are enumerated. For conducting the classification, commercially available practical apparatus can be utilized but any method that is theoretically possible to carrying out the classification can be adopted. Even though any method is utilized, it is preferred that minute particles are removed to increase an average particle size and to make particle size distribution as narrow and uniform as possible.

The classifying method utilizing gravity includes, for example, gravitational classification, mechanical classification and hydraulic classification. Among them, a particularly preferred method is the gravitational classification, which utilizes spontaneous precipitation. Specifically, coloring material particles obtained by dispersion is put into an appropriate vessel and allowed to stand so as to spontaneously precipitate the particles due to gravity. The particles having high precipitation speed accumulate in a lower layer and liquid containing a lot of the minute particles having slow precipitation speed remains as an upper layer. Then, the liquid containing a lot of the minute particles in the upper layer is removed and the particles accumulated in the lower layer are recovered by re-dispersion with a dispersion medium, or only the particles accumulated in the lower layer are took from the bottom of the vessel so that they can be separated from the minute particles in the upper layer. The condition of the spontaneous precipitation (specifically, time) can be determined depending on viscosity of the dispersion and specific gravity and particle size of the coloring material particles.

The classifying method utilizing centrifugal force includes centrifugal classification, and a variety of centrifuges and liquid cyclones are commercially available for such a purpose. A particularly preferred method is a method of utilizing centrifugal precipitation and centrifuges are commercially available for the method. The method can separate the large particles from the minute particles in a short time because of utilizing centrifugal force different from the spontaneous precipitation method. Specifically, the method comprises putting a centrifuge into operation after setting a rotation number and time for the centrifuge, removing supernatant liquid containing the minute particles as an upper layer, gathering the particles accumulated in the lower layer to recover, and re-dispersing the particles with a dispersion medium. A continuous centrifuge is more preferably used wherein the minute particles in the upper layer are continuously discharged and the large particles accumulated in the lower layer is automatically dispersed a certain period of time after the addition of a dispersion medium and discharged. Specifically, the following apparatus are commercially available: NANO-CUT and MICRO-CUT (brand names) manufactured by KRETTEK VERFAHRENSTECHNIK GMBH.

The liquid cyclone is a classifier that can classify into large and small particles only by supplying a dispersion liquid therein in resting state. Specifically, when the dispersing liquid is supplied at high speed in the circumferential direction of a cylindrical vessel, rotation occurs to generate centrifugal force so that the dispersion liquid can be precipitated to separate. The liquid cyclone has the future in that a degree of the separation can be simply and freely selected by changing a supplying rate (supplying pressure or flow volume) or a flow ratio at the outlet part. Specifically, the following apparatus are commercially available: Hydrocyclone (brand name) manufactured by Japan Chemical Engineering & Machinery Co., Ltd.

The classifying method utilizing the interface characteristics of the coloring material particles includes, for example, a method utilizing electrophoresis, homogeneous aggregation or heterogeneous aggregation. Among them, the classifying method utilizing electrophoresis is particularly preferred. The method utilizes the fact that as the particle size increases, electrophoretic speed of the particle increases. By using an apparatus capable of classifying particles depending on the value of electrophoretic speed, the classification can be performed.

As other classifying methods, a classifying method utilizing chromatography is exemplified. For example, there is a method of classifying particles in a centrifugal force field perpendicular to streamline flow. More specifically, a field flow fractionation method wherein large particles flow outside and the central part flows rapidly to discharge small particles and a hydrodynamic chromatography method wherein large particles flow rapidly in the central part by utilizing the property in that particles cannot approach to a wall surface closer than their radius are enumerated as the method for removing minute particles according to the invention.

A volume average diameter of the coloring material particles can be measured by a centrifugal light transmission method using, for example, a super-centrifugal type automatic particle size distribution measuring apparatus (CAPA-700, manufactured by Horiba, Ltd.). The average diameter is expressed using volume average or weight average depending on the calculation method. According to the invention, a preferred volume average diameter of the coloring material particles is in a range of from 0.3 to 4.0 µm. When the volume average diameter is adjusted to 0.3µm or lager, concentration of the coloring material particles is sufficiently achieved and as a result, blur of ink is hard to occur when recorded on a recording medium. The undesirable ejection from a part of the vicinity of head tip is also prevented. On the other hand, when the volume average diameter is adjusted to 4.0 µm or smaller, the clogging of ejecting outlet of head is hard to occur. The volume average diameter of the coloring material particles is more preferably from 0.5 to 3 µm.

According to the invention, the content of coloring material particles having a size of 1/5 or less of a volume average diameter of the coloring material particles is 5% by volume or less based on the total coloring material particles. By adjusting the content of coloring material particles having a size of 1/5 or less of a volume average diameter of the coloring material particles to 5% by volume or less, concentration of the coloring material particles is sufficiently achieved and as a result, blur of ink is hard to occur when recorded on a recording medium. Further, the undesirable ejection from a part of the vicinity of head tip is also prevented. The content of such coloring material particles is more preferably 3% by volume or less and still more preferably 1% by volume or less.

Now, an electrostatic inkjet recording method, in which the inkjet recording ink produced according to the invention is preferably used, is described below.

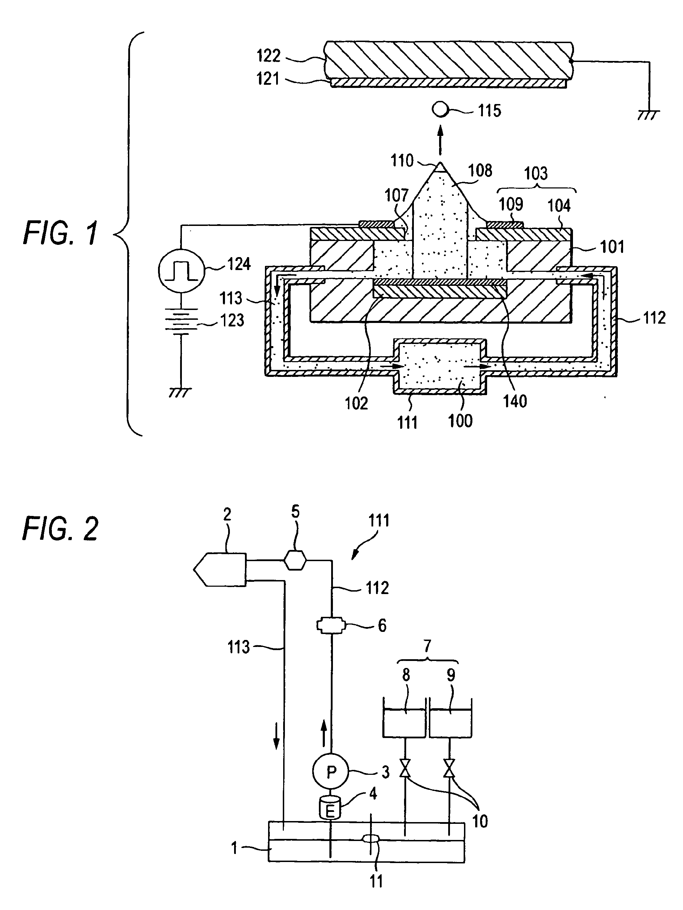

Fig. 1 is a schematic view showing a constructional embodiment of an inkjet head for use in the electrostatic inkjet recording method, and particularly shows a cross-section of an ejection electrode corresponding to a recording dot. In Fig. 1, ink 100 is supplied from an ink circulation system 111 including a pump to a space between a head substrate 102 and an ejection electrode substrate 103 through an ink supply system 112 connected to a head block 101, and recovered to the ink circulation system 111 through an ink recovery system 113 also formed in the head block 101. The ejection electrode substrate 103 is constructed of an insulating substrate 104 having a through-hole 107 and an ejection electrode 109 formed around the through-hole 107 toward a recording medium. On the other hand, a convex ink guide 108 is disposed approximately in the center of the through-hole 107 on the head substrate 102. The convex ink guide 108 is made of an insulating member, for example, a plastic resin or ceramics. Each convex ink guide is disposed at the same line spacing and pitch so that the center thereof corresponds to the center of each through-hole 107, and held on the head substrate 102 by a prescribed method. Each convex ink guide 108 has a shape such that a tip of flat plate having a constant thickness is cut into a triangular or trapezoidal shape, and the tip part thereof forms an ink droplet flying position 110. Each convex ink guide 108 may form a slit-like groove from its tip part, and ink supply to the ink droplet flying position 110 is smoothly conducted due to capillarity of the slit, thereby enabling to enhance the recording frequency. Further, any surface of the ink guide may have conductivity, if desired. In such a case, by making the conductive part in an electrically floating state, it is possible to effectively form an electric field at the ink droplet flying position by means of application of a low voltage to the ejection electrode. Each convex ink guide 108 protrudes approximately vertically from the corresponding through-hole by a prescribed distance in the direction of ink droplet flying. A recording medium 121, for example, recording paper is placed toward the tip of the convex ink guide 108, and a counter electrode 122, which also functions as a role of platen guiding the recording medium 121 is disposed on the back surface of the recording medium 121 in relation to the head substrate 102. Also, a migration electrode 140 is formed in the bottom portion of a space formed by the head substrate 102 and the ejection electrode plate 103. By applying a prescribed voltage to the migration electrode 140, the charged particles in the ink are subjected to electrophoresis in the direction of ejecting position in the ink guide, thereby enabling to enhance responsibility of the ejection.

Next, a specific constructional embodiment of the ejection electrode substrate 103 is described. A plurality of ejection electrodes are aligned in two lines in an array form in the main scanning direction, through-hole 107 is formed in the center of each ejection electrode, and the individual ejection electrode 109 is formed around the through-hole 107. In this embodiment, the insulating substrate 104 is made of polyimide having a thickness of from 25 to 200 µm, the ejection electrode 109 is made of a copper foil having a thickness of from 10 to 100 µm, and the inner diameter of the through-hole 107 is from 150 to 250 µmϕ.

Next, recording action of an inkjet recording device of electrostatic system is described below. An embodiment is described where an ink containing positively charged particles is used, but the invention should not be construed as being limited thereto. At the time of recording, the ink 100 supplied from the ink circulation system 111 through the ink supply system 112 is supplied to the ink droplet flying position 110 of the tip of the convex ink guide 108 through the through-hole 107, and a part of the ink 100 is recovered in the ink circulation system 111 through the ink recovery system 113. A voltage, for example, of +1.5 kV as a continuous bias is applied to the ejection electrode 109 from a bias voltage source 123, and when turning on, a pulse voltage of +500 V as a signal voltage corresponding to an image signal from a signal voltage source 124 is superimposed to the ejection electrode 109. At this time, a voltage of +1.8 kV is applied to the migration electrode 140. On the other hand, the counter electrode 122 provided on the back side of the recording medium 121 is set at a ground voltage of 0 V as shown in Fig. 1. In some cases, the side of the recording medium 121 may be charged, for example, at -1.5 kV for applying a bias voltage. In such a case, an insulating layer is provided on the surface of the counter electrode 122, the recording medium is charged, for example, by means of a corona charger, a scorotron charger or a solid ion generator, the ejection electrode 109 is, for example, grounded, and when turning on, a pulse voltage of +500 v as a signal voltage corresponding to an image signal from the signal voltage source 124 is superimposed to the ejection electrode 109. At that time, a voltage of +200 V is applied to the migration electrode 140. When the ejection electrode 109 is in the turn-on state (in the state where +500 V is applied), and a voltage of +2 kV in total (the pulse voltage of +500 V is superimposed to the bias voltage of DC +1.5 kV) is applied, an ink droplet 115 is ejected from the ink droplet flying position 110 of the tip of the convex electrode 108, is drawn in the direction toward the counter electrode 122, and flies to reach on the recording medium 121 to form an image.

In order to precisely control flight of the ink droplet after ejection to enhance dot placement accuracy on the recording medium, there are often taken measures, for example, provision of an intermediate electrode between the ejection electrode and the recording medium and provision of a guard electrode for suppressing electric field interference between the ejection electrodes. Such measures may of course be preferably employed in the invention, if desired. Also, a porous member may be provided between the head substrate 102 and the ejection electrode substrate 103. In such a case, not only influence by a change of ink inner pressure due to movement of the inkjet head, etc. can be prevented, but also ink supply to the through-hole 107 after ejection of the ink droplet can be rapidly achieved. As a result, flight of the ink droplet 115 can be stabilized, whereby a good image having a uniform density can be recorded at a high speed on the recording medium 121.

Fig. 2 is a schematic view showing a constructional embodiment of an ink circulation system for an inkjet recording apparatus, in which the inkjet recording ink produced according to the invention is preferably used.

The ink circulation system 111 is equipped with a closed type ink tank 1 for storage an ink comprising a coloring material dispersed in a dispersion medium, an ejection head 2 for ejecting the ink corresponding to an input signal and a pump 3 for supplying the ink in the ink tank to the ejection head, and also has an ink supply system 112 running from the ink tank to the ejection head through the pump and an ink recovery system 113 for recovering the ink from the ejection head to the ink tank running from the ejection head to the ink tank. It is preferred that the ink circulation system is equipped at least in one position thereof with a magnetic powder removing device capable of capturing magnetic powder by the application of a magnetic field.

The pump 3 includes those of two types, i.e., a volumetric type and a centrifugal type. The volumetric type pump includes a reciprocal type, a rotary type and other types. The reciprocal type pump includes, for example, a diaphragm pump, a bimor pump, a plunger pump and a valve-less pump. The rotary type pump includes, for example, an external gear pump, an internal gear pump, a tubing pump. Other type of pump includes a finger pump. The centrifugal type pump includes, for example, a scroll pump and a diagonal flow pump. In the case of using any pump, clogging tends to occur, when magnetic powder present in the ink. In particular, in the case of using a pump that belongs to the gear pump or scroll pump and is a magnet driving type, magnetic powder in the ink adheres to a magnet driving member, resulting in the occurrence of clogging in the early stage. Therefore, when magnetic powder is removed from the dispersion or ink, a remarkable improving effect can be obtained, particularly, in the case of using the pump that belongs to the gear pump or scroll pump and is a magnet driving type.

The ink supply system 112 is provided, for example, with a filter 4, an ink concentration detector 6 and accumulator 5.

The ink circulation system 111 is provided with a replenishing ink container 7 comprising a container 8 including a concentrated ink and a container 9 including a diluted ink and a level sensor 11, and is constructed so as to appropriately perform replenishment of the ink to the ink tank through a valve 10.

The invention will be described in more detail with reference to the following examples, but the invention should not be construed as being limited thereto. Comparative Example 1: Ink Composition IJR-1

Twenty parts by weight of Linol Blue FG-7350 (Pigment Blue 15:3, manufactured by Toyo Ink MFG. Co., Ltd.) as a blue pigment and 40 parts by weight of a copolymer of styrene/vinyltoluene/lauryl methacrylate/butyl acrylate/trimethylammoniumethyl methacrylate (anion: p-toluenesulfonate ion) (25/27/2/27/18 by weight, weight-average molecular weight: 11,000) as a resin were pulverized and well mixed in a trio blender (manufactured by Trio Science co., Ltd.), then melt-kneaded by heating at 85°C for 120 minutes in a desktop kneader (PBV-0.1, manufactured by Irie Shokai Co., Ltd.). The resulting pigment resin kneaded product was coarsely pulverized in the trio blender and then finely pulverized in a sample mill (Model SK-M10, manufactured by Kyoritsu Riko Co., Ltd.) Subsequently, 30 parts by weight of the pulverized pigment resin kneaded product, 32.5 parts by weight of Isopar G, 37.5 parts by weight of a 20% by weight solution prepared by dissolving Pigment Dispersant (D-1) shown below in Isopar G under heating and 400 parts by weight of glass beads having a diameter of about 3 mm were charged in a 500 ml-mayonnaise bottle and predispersed by a paint shaker (manufactured by Toyo Seiki Seisaku-Sho, Ltd.) for 30 minutes. After removing the glass beads, the resulting dispersion was dispersed together with zirconia ceramic beads having a diameter of 0.6 mm in a Dyno-mill Model KDL (manufactured by Shinmaru Enterprises Co., Ltd.) at a rotation number of 2,000 rpm while controlling the temperature of the dispersion liquid at 30°C using a thermostatic chamber, NESLABRTE 7 (manufactured by M&S Instruments Trading Inc.) for 6 hours, then at 40°C for one hour and further at 45°C for 3 hours. After removing the zirconia ceramic beads from the resulting dispersion liquid, 330 parts by weight of Isopar G and 0.043 parts by weight of octadecene-maleic acid half octadecylamide copolymer, as a charge controlling agent were added to the dispersion liquid, thereby obtaining Ink Composition (IJR-1) having a particle concentration of 7% by weight. The volume average diameter of pigment resin particles in the ink was measured by a super-centrifugal type automatic particle size distribution measuring apparatus (CAPA-700, manufactured by Horiba, Ltd.). As a result, it was found to be 1.0 µm. Also, the content of minute particles having a size of 1/5 or less of the volume average diameter is 6.1% by volume.

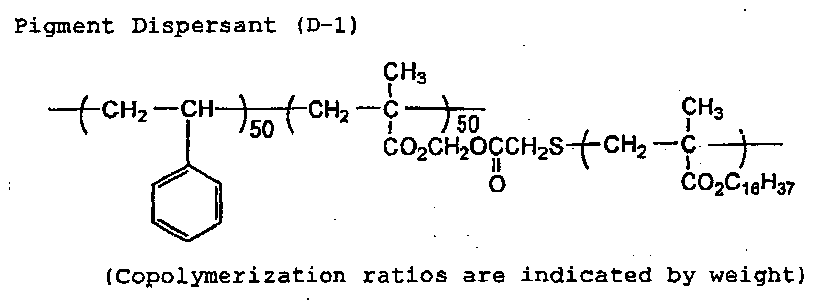

The ink composition had a viscosity of 1.5 mPa·sec (measured by E-type viscometer at 20°C), a surface tension of 23 mN/m (measured by an automatic surface tension meter, manufactured by Kyowa Interface Science Co., Ltd. at 20°C), a relative dielectric constant of 2.30 (measured by LCR Meter AG-4311, manufactured by Ando Electronic Co., Ltd.), and a specific conductivity of the whole ink of 800 pS/cm. The ink exhibited distinct positive charge. The specific conductivity of the ink was measured under the conditions of an applied voltage 5 V and frequency of 1 kHz using the above-described LCR meter and an electrode for liquid (Model LP-05, manufactured by Kawaguchi Electric Works Co., Ltd.). Using Ink Composition (IJR-1), inkjet recording was conducted. Specifically, using an inkjet recording apparatus equipped with 64-channel (100 dpi) electrostatic inkjet heads each having the structure as shown in Fig. 1, after removing dusts on the surface of coated recording paper as a recording medium by pump suction, the ejection head was moved to a drawing position toward the coated recording paper and the ink was ejected at a drawing resolution of 600 dpi to draw an image. The drawn image had many blurs and uneven dots and an image having the satisfactory density could not be obtained. Further, ejection from the ink head was unstable and undesirable ejection from a part other than the head tip often occurred.

### Example 1: Ink Composition IJ-1

To the dispersion obtained by removing zirconia ceramic beads in Comparative Example 1 was added 330 parts by weight of Isopar G and the resulting dispersion liquid was put into a one liter-mayonnaise bottle and allowed to stand for 2 days. The supernatant liquid was removed gently from the dispersion liquid by a decantation method, and to the precipitated particles accumulated at the bottom of the bottle were added Isopar G to adjust a particle concentration of 7% by weight, then 0.06 parts by weight of octadecene-maleic acid half octadecylamide copolymer, as a charge controlling agent was added thereto, thereby preparing Ink Composition (IJ-1) having a specific conductivity of the whole ink of 800 pS/cm. The volume average diameter of pigment resin particles in the ink was 1.02 µm and the content of minute particles having a size of 1/5 or less of the volume average diameter is 4.8% by volume. As a result of the ejection under the same conditions as in Comparative Example 1 except for using Ink Composition (IJ-1), it was found that blur on the drawn image was reduced and the dot density was improved in comparison with Ink Composition (IJR-1) in Comparative Example 1. Further, ejection from the ink head was stable and undesirable ejection from a part other than the head tip did not occur.

### Example 2: Ink Composition IJ-2

To the dispersion obtained by removing zirconia ceramic beads in Comparative Example 1 was added 330 parts by weight of Isopar G and the resulting dispersion liquid was put into a one liter-mayonnaise bottle and allowed to stand for 3 days. The supernatant liquid was removed gently from the dispersion liquid by a decantation method, and to the precipitated particles accumulated at the bottom of the bottle were added Isopar G to adjust a particle concentration of 7% by weight, then 0.07 parts by weight of octadecene-maleic acid half octadecylamide copolymer, as a charge controlling agent was added thereto, thereby preparing Ink Composition (IJ-2) having a specific conductivity of the whole ink of 800 pS/cm. The volume average diameter of pigment resin particles in the ink was 1.02 µm and the content of minute particles having a size of 1/5 or less of the volume average diameter is 4.0% by volume. As a result of the ejection under the same conditions as in Comparative Example 1 except for using Ink Composition (IJ-2), it was found that blur on the drawn image was reduced and the dot density was improved in comparison with Ink Composition (IJR-1) in Comparative Example 1. Further, ejection from the ink head was stable and undesirable ejection from a part other than the head tip did not occur.

### Example 3: Ink Composition IJ-3

To the dispersion obtained by removing zirconia ceramic beads in Comparative Example 1 was added 330 parts by weight of Isopar G and the resulting dispersion liquid was put into a one liter-mayonnaise bottle and allowed to stand for 14 days. The supernatant liquid was removed gently from the dispersion liquid by a decantation method, and to the precipitated particles accumulated at the bottom of the bottle were added Isopar G to adjust a particle concentration of 7% by weight, then 0.10 parts by weight of octadecene-maleic acid half octadecylamide copolymer, as a charge controlling agent was added thereto, thereby preparing Ink Composition (IJ-3) having a specific conductivity of the whole ink of 800 pS/cm. The volume average diameter of pigment resin particles in the ink was 1.0 µm and the content of minute particles having a size of 1/5 or less of the volume average diameter is 1.0% by volume. As a result of the ejection under the same conditions as in Comparative Example 1 except for using Ink Composition (IJ-3), it was found that blur on the drawn image was not occurred at all and the dot image having a satisfactory density was obtained. Further, ejection from the ink head was stable and undesirable ejection from a part other than the head tip did not occur.

### Example 4: Ink Composition IJ-4

To the dispersion obtained by removing zirconia ceramic beads in Comparative Example 1 was added 330 parts by weight of Isopar G and the resulting diluted dispersion was subjected to centrifugal separation using a small-sized high-speed cooling centrifuge (Model SRX-201, manufactured by Tomy Seiko Co., Ltd.) at a rotation number of 3,000 rpm for 15 minutes. The supernatant liquid was removed gently from the dispersion liquid by a decantation method, and to the precipitated particles accumulated at the bottom were added Isopar G to adjust a particle concentration of 7% by weight, then 0.10 parts by weight of octadecene-maleic acid half octadecylamide copolymer, as a charge controlling agent was added thereto, thereby preparing Ink Composition (IJ-4) having a specific conductivity of the whole ink of 800 pS/cm. The volume average diameter of pigment resin particles in the ink was 1.0 µm and the content of minute particles having a size of 1/5 or less of the volume average diameter is 0.7% by volume. As a result of the ejection under the same conditions as in Comparative Example 1 except for using Ink Composition (IJ-4), it was found that blur on the drawn image was not occurred at all and the dot image having a satisfactory density was obtained. Further, ejection from the ink head was stable and undesirable ejection from a part other than the head tip did not occur at all.

### Comparative Example 2: Ink Composition IJR-2

A press cake of Toner BG (manufactured by Clariant Ltd.) as a blue pigment and a 33% toluene solution of a copolymer of styrene/vinyltoluene/lauryl methacrylate/trimethylammoniumethyl methacrylate (anion: p-toluenesulfonate ion) (29/66/2/3 by weight, weight-average molecular weight: 17,000) as a resin twice the amount of the blue pigment were agitated by a flasher, followed by heating and depressurizing to remove moisture and the solvent to obtain a blue block having a moisture content of 1% by weight. The blue block was dried in vacuo to completely eliminate moisture and then pulverized by a sample mill to obtain blue powder of from 0.01 to 0.1 mm.

Then, 30 parts by weight of the pulverized pigment resin kneaded product, 32.5 parts by weight of Isopar G, 37.5 parts by weight of a 20% by weight solution prepared by dissolving Pigment Dispersant (D-1) shown in Comparative Example 1 in Isopar G under heating and 400 parts by weight of glass beads having a diameter of about 3 mm were charged in a 500 ml-mayonnaise bottle and predispersed by a paint shaker (manufactured by Toyo Seiki Seisaku-Sho, Ltd.) for 30 minutes. After removing the glass beads, the resulting dispersion was dispersed together with zirconia ceramic beads having a diameter of 0.6 mm in a Dyno-mill Model KDL (manufactured by Shinmaru Enterprises Co., Ltd.) at a rotation number of 2,000 rpm while controlling the temperature of the dispersion liquid at 25°C using a thermostatic chamber, NESLABRTE 7 (manufactured by M&S Instruments Trading Inc.) for 1 hours. After removing the zirconia ceramic beads from the resulting dispersion liquid, 330 parts by weight of Isopar G and 0.05 parts by weight of octadecene-maleic acid half octadecylamide copolymer, as a charge controlling agent were added to the dispersion liquid, thereby obtaining Ink Composition (IJR-2) having a particle concentration of 7% by weight. The volume average diameter of pigment resin particles in the ink was measured by a super-centrifugal type automatic particle size distribution measuring apparatus (CAPA-700, manufactured by Horiba, Ltd.). As a result, it was found to be 2.0 µm. Also, the content of minute particles having a size of 1/5 or less of the volume average diameter is 8.0% by volume.

The ink properties of the ink composition were measured in the same manner as in Comparative Example 1 and as a result, it was found that a viscosity was 1.5 mPa·sec, a surface tension was 23 mN/m, a relative dielectric constant was 2.35 and a specific conductivity of the whole ink was 800 pS/cm. The ink composition exhibited distinct positive charge. Using Ink Composition (IJR-2), drawing wad conducted by the same inkjet recording apparatus as described in Comparative Example 1. The drawn image had many blurs and uneven dots and an image having the satisfactory density could not be obtained. Further, ejection from the ink head was unstable and undesirable ejection from a part other than the head tip often occurred.

### Example 5: Ink Composition IJ-5

To the dispersion obtained by removing zirconia ceramic beads in Comparative Example 2 was added 330 parts by weight of Isopar G and the resulting dispersion liquid was subjected to the same precipitation separation procedure as in Example 1. To the precipitated particles accumulated at the bottom were added Isopar G to adjust a particle concentration of 7% by weight, then 0.07 parts by weight of octadecene-maleic acid half octadecylamide copolymer, as a charge controlling agent was added thereto, thereby preparing Ink Composition (IJ-5) having a specific conductivity of the whole ink of 800 pS/cm. The volume average diameter of pigment resin particles in the ink was 2.0 µm and the content of minute particles having a size of 1/5 or less of the volume average diameter is 4.5% by volume. As a result of the ejection under the same conditions as in Comparative Example 2 except for using Ink Composition (IJ-5), it was found that blur on the drawn image was reduced and the dot density was improved in comparison with Ink Composition (IJR-2) in Comparative Example 2. Further, ejection from the ink head was stable and undesirable ejection from a part other than the head tip did not occur.

### Example 6: Ink Composition IJ-6

To the dispersion obtained by removing zirconia ceramic beads in Comparative Example 2, was added 330 parts by weight of Isopar G and the resulting diluted dispersion was subjected to centrifugal separation using a small-sized high-speed cooling centrifuge (Model SRX-201, manufactured by Tomy Seiko Co., Ltd.) at a rotation number of 2,000 rpm for 15 minutes. The supernatant liquid was removed gently from the dispersion liquid by a decantation method, and to the precipitated particles accumulated at the bottom were added Isopar G to adjust a particle concentration of 7% by weight, then 0.20 parts by weight of octadecene-maleic acid half octadecylamide copolymer, as a charge controlling agent was added thereto, thereby preparing Ink Composition (IJ-6) having a specific conductivity of the whole ink of 800 pS/cm. The volume average diameter of pigment resin particles in the ink was 2.2 µm and the content of minute particles having a size of 1/5 or less of the volume average diameter is 0.2% by volume. As a result of the ejection under the same conditions as in Comparative Example 1 except for using Ink Composition (IJ-6), it was found that blur on the drawn image was not occurred at all and the dot image having a satisfactory density was obtained. Further, ejection from the ink head was stable and undesirable ejection from a part other than the head tip did not occur at all.

### Example 7: Ink composition IJ-7

Ink Composition (IJR-1) having a particle concentration of 7% by weight obtained in Comparative Example 1 was subjected to classification by means of an electrophoretic classifying apparatus as described below.

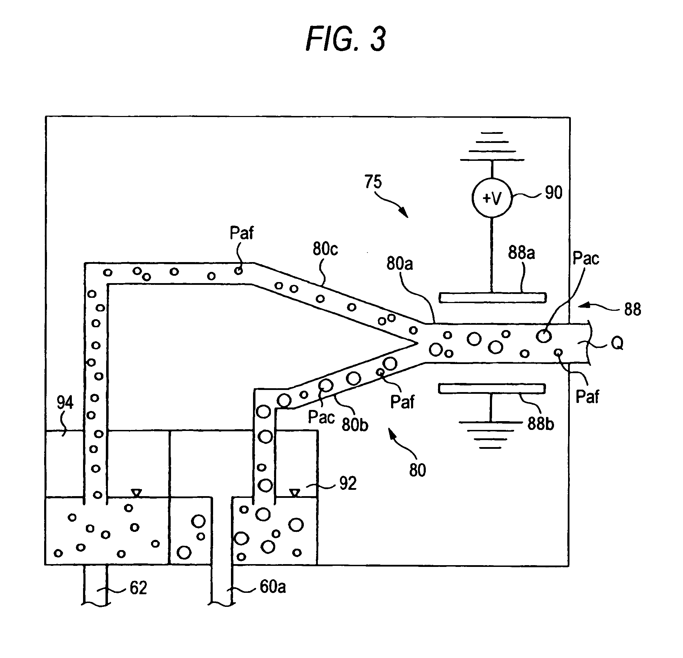

Fig. 3 is a schematic view for illustrating an electrophoretic classifying apparatus used in the example. The electrophoretic classifying apparatus 75 is equipped with an ink passage 80 constructed of a main conduit line 80a and branch conduit lines 80b and 80c, a parallel electrode 88 constructed of two electrode plates 88a and 88b, and a voltage source 90.

The ink passage 80 is constructed of the main conduit line 80a and the branch conduit lines 80b and 80c branched from the main conduit line 80a in the Y-shape. The branch conduit line 80c is connected to an ink disposal subtank 94 and the branch conduit line 80b is connected to an ink recovery subtank 92. The ink recovery subtank 92 is connected to an ink recovery passage 60a and is constructed so as to keep liquid level constant utilizing hydrostatic pressure same as in the case of an ink supply subtank. The ink disposal subtank 94 is connected to an ink disposal passage 62.

The parallel electrode 88 is disposed across the main conduit line 80a, and the electrode plate 88a (shown on the upper side in Fig. 3) on voltage applied side is connected to the voltage source 90 for applying the voltage to the electrode and the grounded electrode plate 88b (shown on the lower side in Fig. 3) is grounded. The parallel electrode 88 forms an electric field across the main conduit line 80a.

The voltage source 90 is preferably a variable voltage source capable of changing the voltage to be applied.

Ink Q flows in the direction from the main conduit line 80a to the branch conduit lines 80b and 80c. When the ink Q moves to the part where the parallel electrode 88 is disposed, a downward force in Fig. 3 is applied to a positively charged coloring material particle in the flowing ink Q and thus, the coloring material particle moves due to electrophoresis in the downward direction in Fig 3. At that time, the force applied to the particle changes depending on its particle size and as a coloring material particle Pac having a large particle size, the downward force applied to the coloring material particle increases and travel distance in the downward direction (toward the electrode plate 88b) due to electrophoresis increases.

Accordingly, of the coloring material particles in the main conduit line 80a, a coloring material particle Pac having a large particle size is classified to the branch conduit line 80b (shown on the lower side in Fig.3) and a coloring material particle Paf having a small particle size is classified to the branch conduit line 80c (shown on the upper side in Fig.3).

The ink Q thus classified to the branch conduit line 80b is supplied to the ink recovery subtank 92, on the other hand, the ink Q thus classified to the branch conduit line 80c is supplied to the ink disposal subtank 94.

The ink Q in the ink recovery subtank 92 is recovered in an ink tank (not shown) through the ink recovery passage 60a and the ink Q in the ink disposal subtank 94 is discarded in an ink disposal tank (not shown) through the ink disposal passage 62.

The conditions for the classification adopted were as follows: distance between the electrode plate 88a and the electrode plate 88b: 1 cm; length of the main conduit line 80a: 35 cm; electric field intensity: 500 v/cm; ink flow rate: 2 mm/sec. The ink recovered in the ink tank (not shown) through the ink recovery subtank 92 and the ink recovery passage 60a was treated three times in total in the same manner by the electrophoretic classifying apparatus. As a result, it was found that the volume average diameter of pigment resin particles in the ink was 1.2 µm and the content of minute particles having a size of 1/5 or less of the volume average diameter is 3.0% by volume. As a result of the ejection under the same conditions as in Comparative Example 1 except for using the ink, it was found that blur on the drawn image was reduced and the dot density was improved in comparison with Ink Composition (IJR-1) in Comparative Example 1. Further, ejection from the ink head was stable and undesirable ejection from a part other than the head tip did not occur.

## Claims

1. A production method of an inkjet recording ink comprising a dispersion medium, a dispersant and coloring material particles containing at least a coloring material, which method comprises a step of removing minute coloring material particles from the coloring material particles, wherein by the step of removing minute coloring material particles from the coloring material particles, the content of coloring material particles having a size of 1/5 or less of the volume average diameter of the coloring material particles is reduced to 5% by volume or less based on the total coloring material particles.

2. The production method of an inkjet recording ink as claimed in Claim 1, wherein the step of removing the minute coloring material particles from the coloring material particles is conducted by a means employing gravity, centrifugal force, interface characteristics of the coloring material particle or a combination thereof.

3. The production method of an inkjet recording ink as claimed in Claim 2, wherein the means employing gravity is a means of using a spontaneous precipitation method.

4. The production method of an inkjet recording ink as claimed in Claim 2, wherein the means employing centrifugal force is a centrifuge or a liquid cyclone.

5. The production method of an inkjet recording ink as claimed in Claim 2, wherein the means employing the interface characteristics of the coloring material particle is a means of using an electrophoresis.

6. An inkjet recording ink obtained by the production method of an inkjet recording ink as claimed in Claim 1.

## Patentansprüche

1. Verfahren zur Erzeugung einer Tintenstrahl-Aufzeichnungstinte, umfassend ein Dispersionsmedium, ein Dispergiermittel und Färbematerialteilchen, umfassend zumindest ein Färbematerial, wobei das Verfahren den Schritt der Entfernung von winzigen Färbematerialteilchen von den Färbematerialteilchen umfasst, worin durch den Schritt zur Entfernung von winzigen Färbematerialteilchen von den Färbematerialteilchen der Gehalt der Färbematerialteilchen mit einer Größe von einem Fünftel oder weniger des volumengemittelten Durchmessers der Färbematerialteilchen auf 5 Vol-% oder weniger, bezogen auf die gesamten Färbematerialteilchen, reduziert wird.

2. Verfahren zur Erzeugung einer Tintenstrahl-Aufzeichnungstinte nach Anspruch 1, worin der Schritt der Entfernung der winzigen Färbematerialteilchen von den Färbematerialteilchen mit Hilfe der Anwendung der Schwerkraft, Zentrifugalkraft, Grenzflächeneigenschaften des Färbematerialteilchens oder einer Kombination davon durchgeführt wird.

3. Verfahren zur Erzeugung einer Tintenstrahl-Aufzeichnungstinte nach Anspruch 2, worin das Mittel, das die Schwerkraft anwendet, ein Mittel unter Verwendung eines spontanen Ausfällverfahrens ist.

4. Verfahren zur Erzeugung einer Tintenstrahl-Aufzeichnungstinte nach Anspruch 2, worin das Mittel, das die Zentrifugalkraft anwendet, eine Zentrifuge oder ein flüssiges Zyklon ist.

5. Verfahren zur Erzeugung einer Tintenstrahl-Aufzeichnungstinte nach Anspruch 2, worin das Mittel, das die Grenzflächeneigenschaften des Färbematerialteilchens anwendet, ein Mittel unter Verwendung der Elektrophorese ist.

6. Tintenstrahl-Aufzeichnungstinte, erhalten durch das Verfahren zur Erzeugung einer Tintenstrahl-Aufzeichnungstinte gemäß Anspruch 1.

## Revendications

1. Une méthode de production d'une encre d' enregistrement à jet d'encre comprenant un milieu de dispersion, un dispersant et des particules de matière colorante contenant au moins une matière colorante, laquelle méthode comprend une étape consistant à retirer de minuscules particules de matière colorante à partir des particules de matière colorante, dans laquelle par l'étape consistant à retirer de minuscules particules de matière colorante à partir des particules de matière colorante, le contenu des particules de matière colorante ayant une taille de 1/5 ou moins du diamètre moyen en volume des particules de matière colorante est réduit à 5 % du volume ou moins sur base de la totalité des particules de matière colorante.

2. La méthode de production d'une encre d'enregistrement à jet d'encre selon la revendication 1, dans laquelle l'étape consistant à retirer les minuscules particules de matière colorante des particules de matière colorante est réalisée par un moyen employant la gravité, la force centrifuge, des caractéristiques d'interface des particules de matière colorante ou une combinaison de ceux-ci.

3. La méthode de production d'une encre d'enregistrement à jet d'encre selon la revendication 2, dans laquelle le moyen employant la gravité est un moyen consistant à utiliser une méthode de précipitation spontanée.

4. La méthode de production d'une encre d'enregistrement à jet d'encre selon la revendication 2, dans laquelle le moyen employant la force centrifuge est une centrifugeuse ou un cyclone à liquides.

5. La méthode de production d' une encre d'enregistrement à jet d'encre selon la revendication 2, dans laquelle le moyen employant les caractéristiques d'interface des particules de matière colorante est un moyen consistant à utiliser une électrophorèse.

6. Une encre d'enregistrement à jet d'encre obtenue par la méthode de production d'une encre d'enregistrement à jet d'encre selon la revendication 1.
